Europäisches Patentamt

European Patent Office

Office européen des brevets

(19)

(11) Veröffentlichungsnummer: **0 284 962 B1**

(12) # EUROPÄISCHE PATENTSCHRIFT

(45) Veröffentlichungstag der Patentschrift: **02.03.94**

(51) Int. Cl.⁵: **H04N 7/13**, H04N 7/133

(21) Anmeldenummer: **88104576.9**

(22) Anmeldetag: **22.03.88**

(54) **Verfahren zur Bilddatenreduktion für digitale Fernsehsignale.**

(30) Priorität: **03.04.87 DE 3711260**

(43) Veröffentlichungstag der Anmeldung:
**05.10.88 Patentblatt 88/40**

(45) Bekanntmachung des Hinweises auf die
Patenterteilung:
**02.03.94 Patentblatt 94/09**

(84) Benannte Vertragsstaaten:
**AT BE CH DE FR GB IT LI LU NL SE**

(56) Entgegenhaltungen:
**EP-A- 0 201 679**
**DE-A- 3 029 190**

**I.E.E.E. INTERNATIONAL CONFERENCE ON
COMMUNICATIONS '87, COMMUNICATIONS-
SOUND TO LIGHT vol. 1, Juni 1987, SEATTLE,
WASHINGTON Seiten 151 - 156; H. HÖLZL-
WIMMER ET AL.: "A 64 KBIT/S MOTION COM-
PENSATED TRANSFORM CODER USING VEC-
TOR OUANTIZATION WITH SCENE ADAPTIVE
CODEBOOK"**

(73) Patentinhaber: **SIEMENS AKTIENGESELL-
SCHAFT**
**Wittelsbacherplatz 2**
**D-80333 München(DE)**

(72) Erfinder: **Hölzlwimmer, Herbert, Dipl.-Ing.**
**Joseph-Seifried-Strasse 26**
**D-8000 München(DE)**
Erfinder: **Hammer, Bernard, Dr.**
**Geigelsteiner Strasse 24**
**D-8098 Pfaffing(DE)**

**Beschreibung**

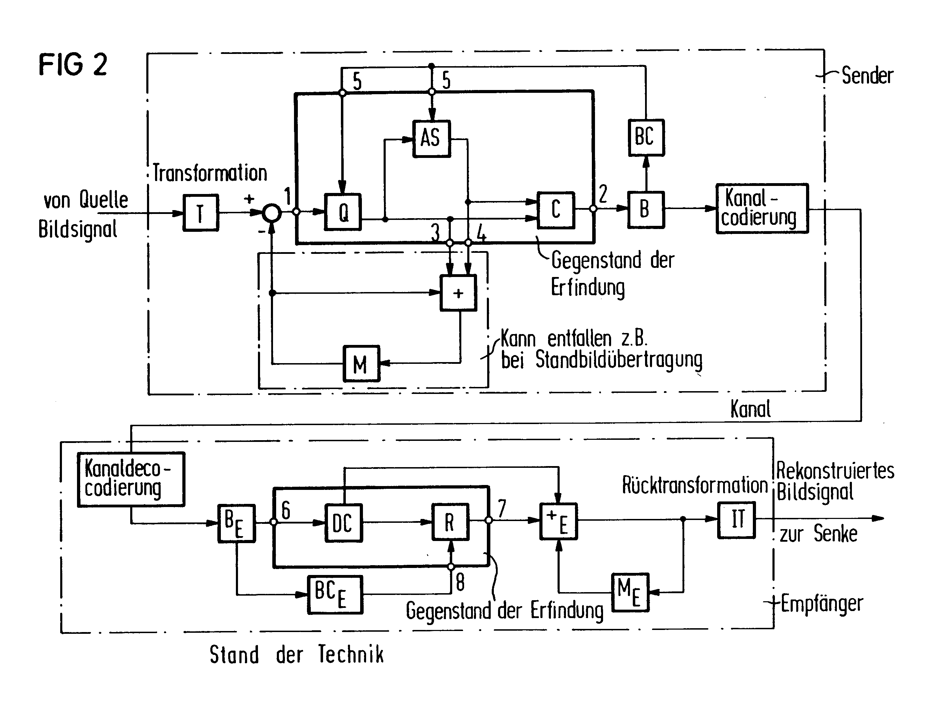

Bei der Hybridcodierung von Bildsequenzen wird in an sich bekannter Weise zuerst eine blockweise zweidimensionale Transformation (vorzugsweise die Diskrete Cosinus-Transformation DCT) (FIG 2,T) innerhalb des aktuellen Bildsignals durchgeführt. Als nächstes wird die Differenz aus dem aktuellen Bildsignal und einem Bildsignal, das durch Vorhersage aus dem vorangegangenen Bildsignal gewonnen wurde, gebildet (Difference Pulse Code-modulation DPCM) (M+). Die berechneten Prädiktionsfehler werden quantisiert (Q) und codiert (C). Dabei kann in einer identischen Struktur die Transformation auch in die DPCM-Schleife verlegt werden. Dann ist jedoch vor einem Auffrischen des DPCM-Speicherinhalts (+) eine inverse Transformation erforderlich. Zur Erzielung einer konstanten Kanalrate werden die Codeworte in einen Ausgangspuffer geschrieben (B). Der Pufferfüllungsgrad wird durch Verändern der örtlichen und zeitlichen Auflösung sowie der Quantisiererauflösung geregelt (BC). Da der Bildinhalt in den einzelnen Blöcken sehr verschieden sein kann, ist es nicht sinnvoll, alle Blöcke in gleicher Weise zu quantisieren und zu codieren. Es ist vielmehr noch eine Klassifikations- und Analyseeinheit (AS) notwendig, um die Quantisierung und Codierung an das Bildsignal anzupassen. Ferner sind nicht alle Koeffizienten des transformierten Signals relevant. Hier sind effektive Verfahren zur Beschreibung des Bereichs relevanter Koeffizienten, die übertragen werden, erforderlich.

Die Beträge der Transformationskoeffizienten haben meistens einen typischen Verlauf. Dies kann für eine weitere Reduzierung der Datenrate ausgenützt werden. Zur Klassifizierung wird in herkömmlicher Weise meist die sog. AC-Energie, vergl. beispielsweise verwendet W.H. Chen, H. Smith: "Adaptive Coding of Monochrome and Color Images, IEEE Transactions on Communications" Vol. COM-25, No. 11, November 1977; F. May: "Codierung von Bildfolgen mit geringer Bitrate für gestörte Übertragungskanäle", NTG-Fachberichte, Band 74, 1980. Der rekursiv prädiktive Algorithmus nach W.H. Chen, W.K. Pratt: "Scene adaptive Coder", IEEE Trans. Comm. Vol. COM-32, No. 3, March 1984, macht eine vorherige Klassifikation überflüssig. Dies geschieht vielmehr während der Codierung eines Blocks durch Ausnutzung von Wissen, das aus bereits übertragenen Koeffizienten gewonnen wird.

Die AC-Energie ist aber nur bedingt zur Klassifikation geeignet, da sie nicht die Verteilung der "Energie" = Summe der Quadrate der Koeffizienten innerhalb eines Blocks berücksichtigt. Das Verfahren nach W.H. Chen, W.K. Pratt: "Scene adaptive Coder" macht eine adaptive Quantisierung nicht möglich. Die Vektorquantisierung ist eine Möglichkeit, die Datenrate bei Transformationsverfahren weiter zu reduzieren, vergl. Y. Kata, N. Mukawa, W. Watanabe: "Hybrid Vector and Scalar Quantisation for Image Coding", Picture Coding Symposium 1986, Tokio; Saghri, J.A, Tescher A.: "Adaptive transform coding based on chain coding concepts", IEEE Trans. Com. Vol. COM-34, No. 2, Febr. 1986. In dem Verfahren nach Y. Kata, N. Mukawa, W. Watanabe "Hybrid Vector and Scalar Quantisation for Image Coding, wird dabei die Differenz zwischen dem Repräsentativvektor und dem Originalvektor skalar quantisiert und übertragen. Dabei wird das Ergebnis der Vektorquantisierung zur adaptiven Max-Quantisierung verwendet. Wird das Ergebnis der Vektorquantisierung noch zur Quantisierersteuerung verwendet, so ist es besser, von Klassifikation zu sprechen. Dabei werden bei Y. Kata, N. Mukawa, W. Watanabe "Hybrid Vector and Scalar Quantisation for Image Coding" zur skalaren Quantisierung optimale Max-Quantisierer verwendet. Zur Beschreibung des Bereichs der übertragenen Koeffizienten werden Lauflängen-Codierung, vergl. W. H. Chen, H. Smith: "Adaptive Coding of Monochrom and Color Images" und diagonalenweise arbeitende Verfahren verwendet, vergl. H. Hölzlwimmer, W. Tengler "Verfahren zur Bilddatenreduktion für digitale Fernsehsignale", Deutsche Patentanmeldung DE-A-35 13 877.

Der vorliegenden Erfindung liegt die Aufgabe zugrunde, das Konzept nach Y. Kata, N. Mukawa, W. Watanabe: "Hybrid Vector and Scalar Quantisation for Image Coding" zu verbessern und eine vorteilhafte Kombination mit den Verfahren nach der Deutschen Patentanmeldung DE-A-35 13 877 zu schaffen. Dadurch soll eine leistungsfähigere Klassifikation, Beschreibung und Codierung der Bereiche relevanter DCT-Koeffizienten erreicht werden.

Die der Erfindung zugrundeliegende Aufgabe wird durch ein Verfahren gemäß Patentanspruch 1 und eine Schaltungsanordnung gemäß Patentanspruch 6 gelöst.

Vorteilhafte Weiterbildungen der Erfindung sind durch die in den Unteransprüchen angegebenen Merkmale gekennzeichnet.

Im folgenden wird die vorliegende Erfindung im einzelnen anhand mehrerer Figuren, die bevorzugte Ausführungsbeispiele für die Erfindung betreffen, beschrieben.

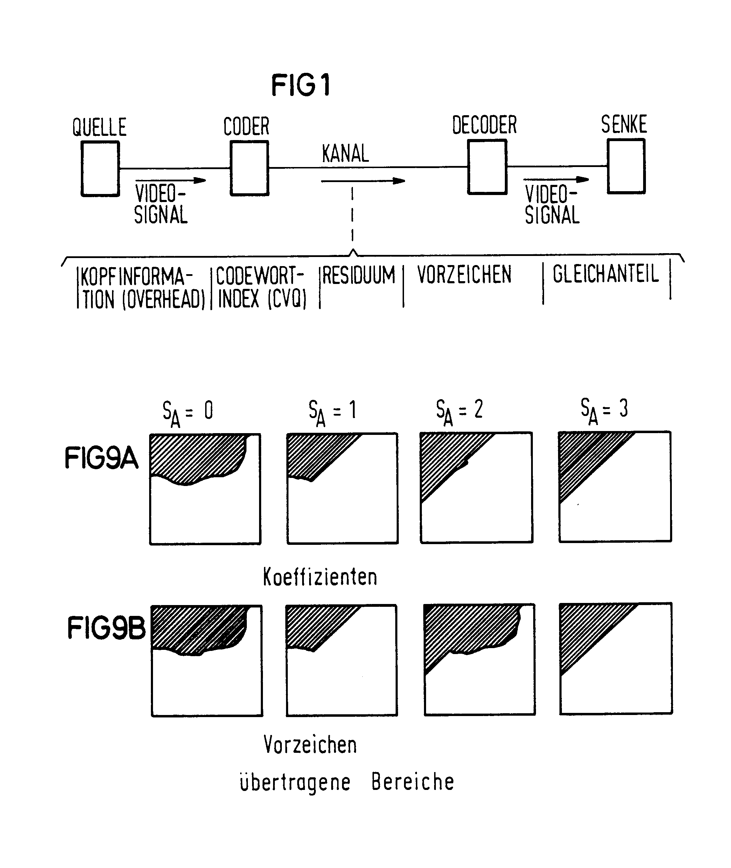

FIG 1      zeigt eine schematische Darstellung eines Übertragungssystems, auf das die vorliegende Erfindung anwendbar ist, wobei aus der Darstellung hervorgeht, welche wesentlichen Signale über den Kanal des Übertragungssystems übertragen werden.

FIG 2      zeigt ein Blockschaltbild eines Übertragungssystems mit einem sog. Hybrid-DCT-DPCM-Codierer und einem entsprechenden Decodierer gemäß dem Stand der Technik.

FIG 3    zeigt einen Teil des in FIG 2 gezeigten Übertragungssystems, nämlich einen senderseitigen Codierer für ein vorab gebildetes transformiertes Prädiktionsfehlersignal gemäß der vorliegenden Erfindung.

FIG 4    zeigt einen Teil des in FIG 2 gezeigten Übertragungssystems, nämlich einen empfängerseitigen Decodierer zum Decodieren des übertragenen Prädiktionsfehlersignals gemäß der vorliegenden Erfindung.

FIG 5    zeigt eine symbolische Darstellung des Prinzips für eine Klasseneinteilung des zu übertragenden Signals aufgrund berechneter Energiemaße.

FIG 6    zeigt Bereiche zur Berechnung der für die Klasseneinteilung notwendigen Energiemaße des zu übertragenden Signals.

FIG 7    zeigt ein Ausführungsbeispiel für eine Schaltungsanordnung zur Berechnung von Energiemaßen, die in einer Auswertelogik ausgewertet werden, und zur Erzeugung von Signalen $N_D$, $L_{OK}$ und SA.

FIG 8    zeigt eine schematische Darstellung einer Matrix, in die verschiedene Koeffizientenbereiche eingetragen sind.

FIG 9    zeigt beispielhaft und schematisch in deren Teil A die in Abhängigkeit von einem Bereichsselektor übertragenen Koeffizientenbereiche und in deren Teil B die Bereiche, in denen Vorzeichen der Koeffizienten übertragen werden, welche Bereiche sich von Fall zu Fall als Ergebnis der in der Schaltungsanordnung gemäß FIG 7 ausgeführten Analyse ergeben (vergl. auch FIG 8).

## 1. Senderseitiger Codierer

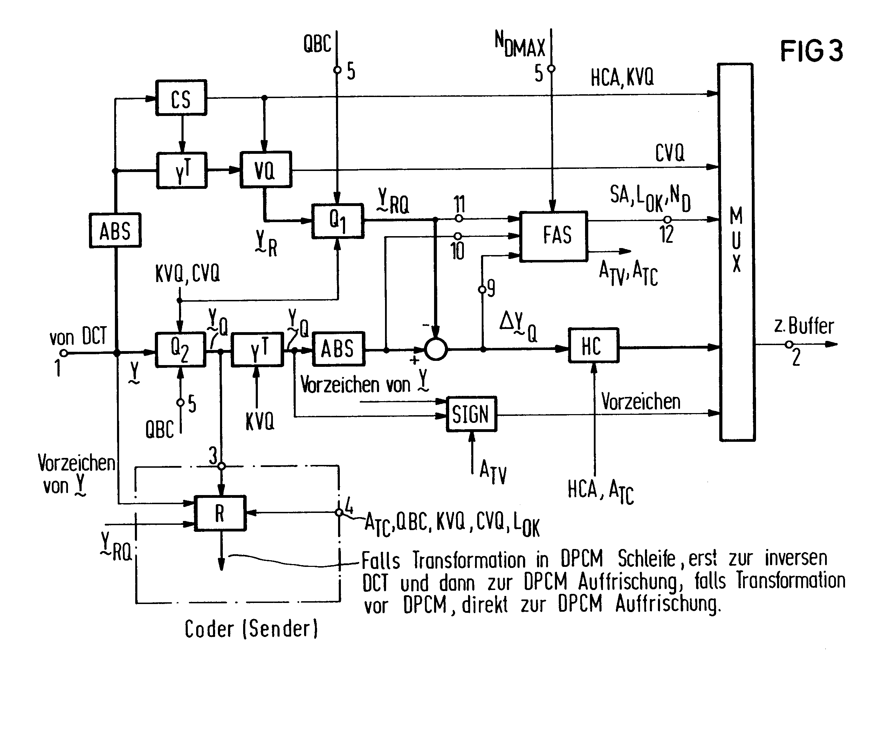

Ein Bild-zu-Bild-Differenzsignal wird einer "Diskreten Cosinus-Transformation (DCT)" oder einer anderen geeigneten Transformation unterzogen. Die Absolutbeträge der Spektralkoeffizienten $y(u,v)$ werden einer Vektorquantisierung (VQ), die mittels zumindest eines Vektorquantisierers vorgenommen wird, zugeführt. Hierbei bleibt der Gleichanteil $y(0,0)$ des Differenzsignals unberücksichtigt. Ferner können die Koeffizienten $y(u,v)$ mit $u + v > 15$ ($0 \leq u,v \leq 15$) ohne Verschlechterung der Bildqualität in jedem Fall fortgelassen werden. Dadurch ergeben sich 135 Koeffizienten als Eingangssignal zur Vektorquantisierung. Hierzu wird der Abstand des zu codierenden Blocks zu allen Repräsentativblöcken berechnet (FIG 3). Im folgenden bezeichnet "$y(u,v)$" einen Transformationskoeffizienten aus dem Block $\underline{Y}$)

$$D(CVQ) = \sum_{u=0}^{N-1} \sum_{v=0}^{N-1-u} f_A (y(u,v) - y_R(u,v,CVQ)) - f_A(y(0,0-y_R(0,0,CVQ)) \qquad 1)$$

Ein Block wird derjenigen Klasse CVQ zugeordnet, zu der der Abstand $D(CVQ)$ minimal ist. Die Repräsentativblöcke $Y_R(CVQ)$ bilden ein "Codebuch". Die Codebuchgröße in dem vorliegenden Anwendungsfall beträgt 128 Blöcke. Es bedeuten:

$y(u,v)$              zu codierender Block

$y_R(u,v,CVQ)$     Repräsentativblock

$f_A$                    Abstandsmaß

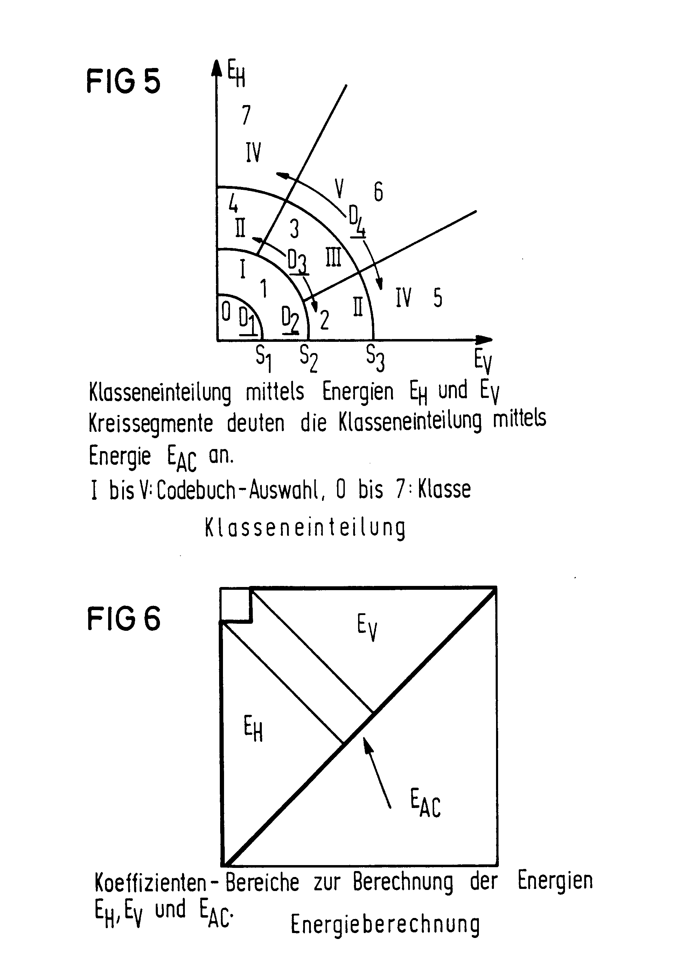

Vor der Vektorquantisierung wird noch eine Klassifikation (CS) zum Zwecke der Auswahl eines aus 5 Codebüchern durchgeführt (FIG 5 u. FIG 6). Hierzu wird aus den Koeffizienten, welche vornehmlich horizontalen bzw. vertikalen Bildstrukturen entsprechen, ein horizontales bzw. vertikales Energiemaß $E_H$ bzw. $E_V$ berechnet (FIG 6). Ferner wird die Gesamtenergie $E_{AC}$ der AC-Koeffizienten berechnet. Die Klasseneinteilung mittels dieser Energien zeigt FIG 5. Hierzu findet in einem ersten Schritt durch Vergleich der Energie $E_{AC}$ mit drei Schwellen $S_1$ bis $S_3$ eine Einteilung in vier Detailklassen $D_1...D_4$ statt (in FIG 5 durch drei darin eingetragene Kreissegmente symbolisiert). Die beiden Klassen $D_3$, $D_4$ mit hohem Detailgehalt werden noch in jeweils drei Richtungsklassen 2, 3, 4 bzw. 5, 6, 7 (horizontal, diagonal und vertikal unterteilt) (in FIG 5 durch zwei darin eingetragene Geraden dargestellt), so daß sich insgesamt acht Klassen 0...7 ergeben. Für die Klassen 2, 5 und 4, 7 kann nach Transponieren ($Y^T$) des Eingangsblocks dasselbe Codebuch verwendet werden. Die in der Klassifikationseinheit (CS) ermittelte Klasse (KVQ) wird ferner zur Auswahl (HCA) einer aus sieben Huffman-Codetabellen-Zuordnungsmatrizen (HCZM) verwendet. Dabei existiert für die Klassen 1 bis 4 jeweils eine HCZM. Die Klassen 5...7 werden mittels der Gesamtenergie $E_{AC}$ nochmals aufgespalten. Unter Ausnutzung der bereits erwähnten Symmetrie ($Y^T$) ergibt dies sieben HCZM's, deren Auswahl nur für die Klassen 5 bis 7 eine zusätzliche Kopfinformation (Overhead) von 1 bit erfordert. In Klasse 0 findet keine Übertragung von AC-Koeffizienten statt.

Die Vorzeichen der Spektralkoeffizienten werden nach der Quantisierung und Transponierung abgespalten (ABS, SIGN) und getrennt übertragen. Dabei wird nur dann ein Vorzeichen übertragen, wenn $y_Q(u,v) \neq 0$. Der sich aus der Vektorquantisierung ergebende Repräsentativblock $Y_R$(CVQ) wird skalar und gleichförmig quantisiert ($Q_1$) und vom skalar und gleichformig quantisierten ($Q_2$) und transponierten Block $Y_Q^T$ subtrahiert, wodurch sich ein Differenzsignal $\underline{Y}_Q$ ergibt. Vor dieser Differenzbildung werden vom Signal $\underline{Y}_Q^T$ die Absolutbeträge seiner Koeffizienten gebildet.

Diese sklare und gleichförmige Quantisierung ($Q_1$, $Q_2$) wird von der Klasse KVQ, einem Vektorquantisierer-Codewort-Index CVQ und einem Pufferreglersignal QBC gesteuert. Dabei gibt ein Pufferregler eine mittlere Quantisiererauflösung QBC vor. Diese wird dann in Abhängigkeit von KVQ und CVQ verfeinert oder vergröbert. Die zulässige Verfeinerung oder Vergröberung ist für alle Repräsentativvektoren aus dem Codebuch und für alle Codebücher in einer Tabelle, die beispielsweise in dem Quantisierer $Q_1$ oder $Q_2$ enthalten ist, abgelegt. Die Quantisierer können ggf. ebenfalls als Tabellen realisiert sein.

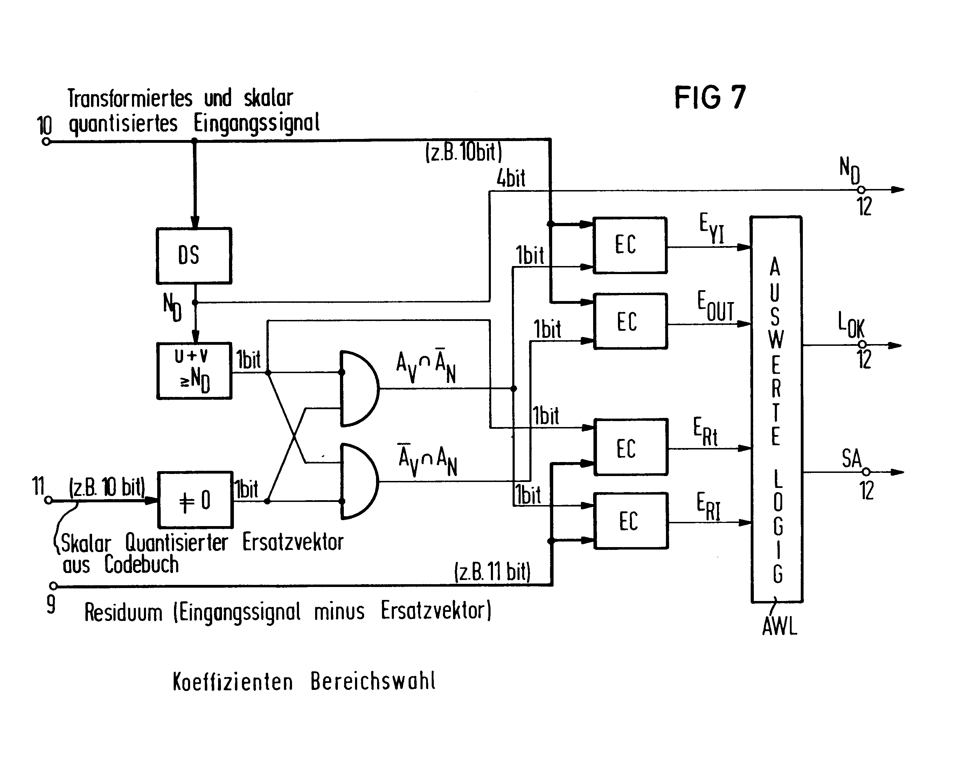

Das Differenzsignal $\Delta\underline{Y}_Q$, das quantisierte Eingangssignal $\underline{Y}_Q$ und der quantisierte Representativblock $\underline{Y}_R$ werden einer Analysestufe FAS (FIG 3, FIG 7) zugeführt .

Diese Analysestufe FAS liefert die Signale $N_D$, SA und $L_{OK}$, welche den Bereich der übertragenen Koeffizienten des Residuums beschreiben.

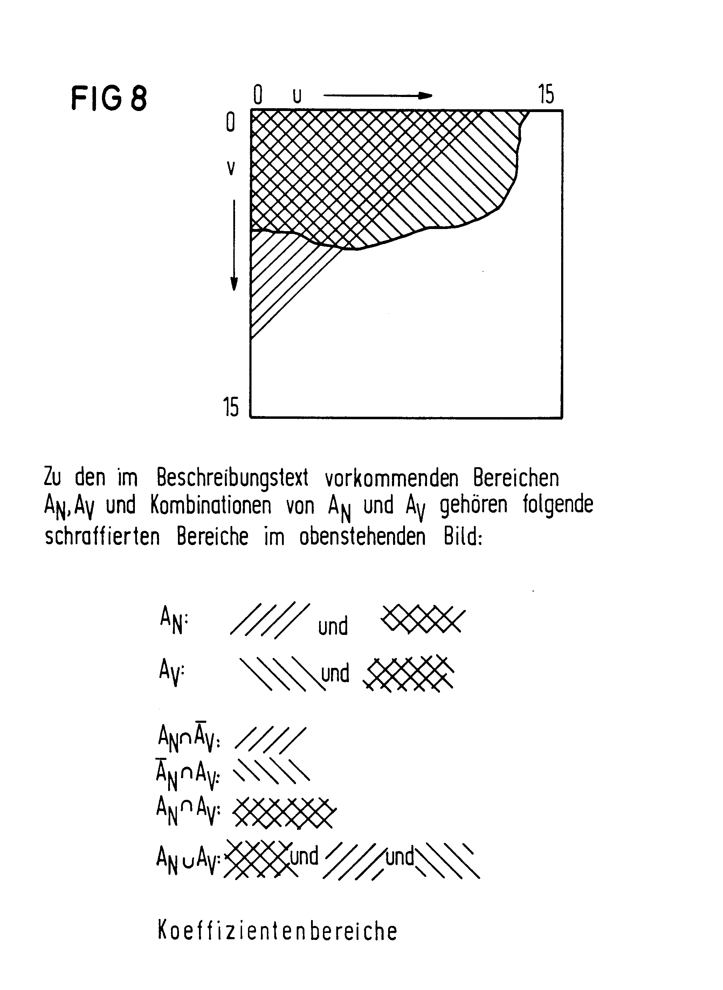

Dabei wird zuerst in einer Einheit (DS) die Diagonale ($N_D$),bis zu der übertragen wird (u + v = const definiert eine Diagonale), wie aus der Europäischen Patentanmeldung 0 201 679 bekannt, bestimmt (FIG 7). Durch $N_D$ wird ein Koeffizientenbereich ($A_N$) von DCT-Koeffizienten festgelegt (FIG 8). Durch $y_{RQ}$(u, v, CVQ) $\neq 0$ ist ein weiterer Koeffizientenbereich $A_V$ gegeben. Folgende Energien werden berechnet (EC):

$E_{YI}$:     Energie des quantisierten Eingangssignals im Bereich $A_v \cap \overline{A_N}$

$E_{RI}$:     Energie des quantisierten Residuums im Bereich $A_v \cap \overline{A_N}$

$E_{Rt}$:     Energie des Residuums im Bereich $A_N$

$E_{out}$:     Energie des quantisierten Eingangssignals im Bereich $\overline{A_v} \cap A_N$

Mit diesen Energien wird der zu übertragende Koeffizientenbereich für Vorzeichen $A_{TV}$ und Koeffizienten $A_{TC}$ wie folgt ermittelt:

```
if      (E_Rt < S_OK)   then
        LOK = 1..
        keine Übertragung des Residuums
        Übertrage Vorzeichen des Originalsignals Y im Bereich
                                                 ~
        A_TV = A_V


else    L_OK = 0
        if (E_OUT ≤ S_OUT ∧ E_RI > E_YI) then
            S_A = 0
```

Übertrage Koeffizienten und Vorzeichen innerhalb des
Bereichs

$$A_{TC} = A_{TV} = A_V$$

else if $(E_{OUT} \leq S_{OUT} \wedge E_{RI} < E_{YI})$ then
$S_A = 1$
Übertrage Koeffizienten und Vorzeichen innerhalb
des Bereichs

$$A_{TC} = A_{TV} = A_N \cap A_V$$

else if $(E_{OUT} > S_{OUT} \wedge E_{RI} < E_{YI})$ then
$S_A = 2$
Übertrage Koeffizienten innerhalb des
Bereichs $A_{TC} = A_N$
und Vorzeichen innerhalb des
Bereichs $A_{TV} = A_N \cup A_V$

else if $(E_{OUT} > S_{OUT} \wedge E_{RI} \geq E_{YI})$ then
$S_A = 3$
Übertrage Koeffizienten und Vorzeichen innerhalb
des Bereichs $A_{TC} = A_{TV} = A_N$

endif

endif

Zur Rekonstruktion der Koeffizientenbereiche $A_{TV}$ und $A_{TC}$ beim Empfänger werden die Größen $S_A$ (FIG 9) und $N_D$ (wenn $S_A \neq 0$) übertragen, wenn $L_{OK} = 0$. Ist $L_{OK} = 1$, werden nur die Vorzeichen im Bereich $A_v$ übertragen und es erfolgt keine Übertragung des Residuums. $L_{OK}$ wird immer mit 1 bit übertragen, wenn $KVQ \neq 0$. Ferner werden, wenn $L_{OK} = 1$ ist, die Vorzeichen nicht von dem quantisierten Signal $Y_Q$ genommen, sondern von dem Original-Signal $\underline{Y}$.

Eine Rekonstruktionseinheit (FIG 3) (R) wählt aus den Koeffizienten des quantisierten Eingangssignals $\underline{Y}_Q$ diejenigen innerhalb des Bereichs $A_{TC}$ (d. h. die übertragen wurden) aus und weist allen Koeffizienten außerhalb $A_{TC}$ den Wert Null zu. Ist $L_{OK} = 1$, werden die Vorzeichen von $\underline{Y}$ für die Fälle $Y_{RQ} (u,v) \neq 0$ auf $\underline{Y}_{RQ}$ übertragen und $\underline{Y}_{RQ}$ wird anstelle von $\underline{Y}_Q$ weiterverarbeitet. Außerdem wird in der Einheit (R) eine inverse Skalierung (Quantisierung) durchgeführt. Erfolgt die Transformation (FIG 2) (T) innerhalb der DPCM-Schleife, wird das Ausgangssignal der Einheit (R) über eine inverse Transformation der DPCM-Auffrischung ( + ) (FIG 2) zugeführt, andernfalls direkt.

In einer Codiereinheit (HC) (FIG 3) werden diejenigen Koeffizienten, die innerhalb des Bereichs $A_{TC}$ liegen, Huffman-codiert. Ein Multiplexer (MUX) faßt alle zu übertragenden Signale zusammen und schreibt sie in einen Ausgangspuffer ein.

Insgesamt wird für einen Block von DCT-Koeffizienten folgende Information übertragen:

Verzeichnis der auftreffenden Signale

| Signal | Bedingung | Anzahl der Bits | Bemerkung |
|---|---|---|---|
| Kopfinformation (Overhead): | | | |
| KVQ | keine | 3 bit | Klasse |
| HCA | B1 | 1 bit | zusätzliche Klassen-information für Huffman-Codierung |
| $L_{OK}$ | B3 | 1 bit | Übertragung des Residuums notwendig ? (ja=0/nein=1) |
| $S_A$ | B2 $\wedge$ B3 | 1...3 bit | Koeffizientenbereichs-selektor (FIG 9) |
| $N_D$ | B2 $\wedge$ B3 $\wedge$ B4 | | |

6

Information über Koeffizientenwerte

| | | | |
|---|---|---|---|
| CVQ | B3 | 7 bit | Vektorquantisierer-Index |
| $\underset{\sim}{Y}_Q$ | B2 $\wedge$ B3 | * | Residuum wird im Bereich |
| | | | A Huffman-codiert |
| Vorzeichen B3 | . | * | Vorzeichen im Bereich A |
| y(0,0) | keine | * | Gleichanteil |

Bedingungen:

B1: KVQ $>$ 4

B2: $L_{OK}$ = 0

B3: KVQ $\neq$ 0

B4: $S_A$ = 0

(* sehr stark von den Bereichen $A_{TC}$ und $A_{TV}$ abhängig und beim Residuum auch von der Amplitudenverteilung)

<u>2. Empfängerseitiger Decodierer</u>

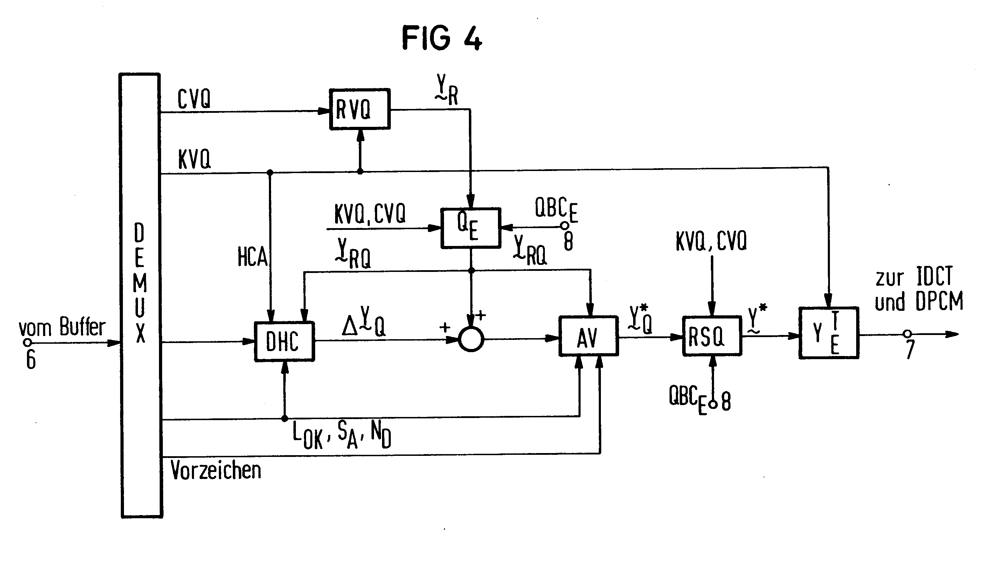

Beim Empfänger werden die ankommenden Signale mit Hilfe eines Demultiplexers (DEMUX) verteilt und decodiert. Mittels des empfangenen Vektorquantisierer-Index CVQ und der Klasee KVQ wird der entsprechende Repräsentativblock $\underline{Y}_R$ aus dem Codebuch ausgelesen (RVQ) (FIG 4). Dieser Repräsentativblock wird in einer skalaren Quantisiereinheit ($Q_E$) verarbeitet, welche von den empfangenen Signalen KVQ und CVQ, sowie von einem von einem Empfängerpufferregler ($BC_E$) (FIG 2) gelieferten Signal QBC gesteuert wird.

In einer Huffman-Decodiereinheit (DHC) wird aus den empfangenen Signalen $S_A$ und $N_D$ sowie dem quantisierten Repräsentativblock $Y_{RQ}$ der Bereich ($A_{TC}$) der übertragenen DCT-Koeffizienten ermittelt. Anschließend wird die dem Bereich entsprechende Anzahl von AC-Koeffizienten decodiert. Ist $L_{OK}$ = 1, werden nur CVQ und die Vorzeichen decodiert und alle AC-Koeffizienten des Signal $\Delta\underline{Y}_Q$ gleich Null gesetzt. Ist KVQ = 0, wird nur der Gleichanteil decodiert. Die Einheiten (RVQ) und (DHC) liefern dann nur AC-Koeffizienten mit den Werten Null.

Das von der Einheit DHC gelieferte Signal $\Delta\underline{Y}_Q$ wird zum quantisierten Repräsentativblock $\underline{Y}_{RQ}$ addiert, um ein quantisiertes Signal $\underline{Y}_Q^*$ zu erhalten.

Eine Einheit (AV) rekonstruiert sich aus den Signalen $S_A$, $N_D$ und $\underline{Y}_{RQ}$ den Bereich $A_{TV}$ der übertragenen Vorzeichen und fügt die von dem Demultiplexer (DEMUX) gelieferten Vorzeichen-Bits wieder an die AC-Koeffizienten des Signals $\underline{Y}_Q^*$. Dieses Signal $\underline{Y}_Q^*$ wird einer "inversen" Quantisierung (RSQ), welche von den Signalen QBC, KVQ und CVQ gesteuert wird, zugeführt. Das so erhaltene Signal $\underline{Y}^*$ wird in einer Einheit ($Y^T$) transponiert, wenn KVQ = 4 oder KVQ = 7 ist. Das von der Einheit ($Y^T$) gelieferte Signal wird zur endgültigen Rekonstruktion an eine inverse Transformationseinheit (IT) und eine DPCM (<u>D</u>ifferenz-<u>P</u>ulsco<u>d</u>e<u>m</u>odulation weitergeleitet.

**Patentansprüche**

1. Verfahren zur Bilddatenreduktion für digitale Fernsehsignale, mit einer Vorverarbeitung der Signale mittels blockweisen Transformationsverfahrens, wobei in der Vorverarbeitung sowohl eine Transformation als auch eine Differenzbildung zwischen einem Signal, das zu einem Zeitpunkt t-1 erzeugt und in einem Bildspeicher abgelegt wurde, und einem Signal, das zu einem Zeitpunkt t entsteht, durchgeführt werden, so daß durch die Vorverarbeitung ein transformiertes Bild-zu-Bild-Prädiktionsfehlersignal gebildet wird, wobei das derart gebildete Prädiktionsfehlersignal einer skalaren Quantisierung unterzogen wird, wobei aus dem quantisierten Prädiktionsfehlersignal eine Zahl $N_D$ ermittelt wird, welche der Nebendiagonalenparallele in einer Koeffizientenmatrix entspricht, bis zu welcher ausgehend von einem Gleichanteil signifikante Koeffizienten enthalten sind, und welche Zahl dazu verwendet wird, die Anzahl der zu übertragenden Koeffizienten zu reduzieren, welche Zahl $N_D$ ebenfalls übertragen wird, dadurch **gekennzeichnet,**
   - daß in an sich bekannter Weise, das Prädiktionsfehlersignal außerdem einer Vektorquantisierung unterzogen wird und der dadurch ausgewählte Repräsentativblock mittelbar durch seinen Index, der seine Adresse in einem Codebuch darstellt, übertragen wird und der Repäsentativblock von dem quantisierten Prädiktionsfehlersignal subtrahiert wird, um dadurch eine Verringerung der Energie des zu übertragenden Signals zu erreichen,
   - daß ein Absolutbetrag des transformierten Eingangssignals durch Eliminieren des Vorzeichens gebildet wird, um eine mehr effiziente Vektorquantisierung durchführen zu können,
   - daß die Vorzeichen für Koeffizienten mit einem Wert ungleich Null von den Beträgen der Koeffizienten getrennt übertragen werden,
   - daß eine Klassifizierung des Blocks von Transformations-Koeffizienten zum Zwecke der Auswahl eines aus einer Vielzahl von Codebüchern bei damit einhergehender Reduzierung der Anzahl von Codebüchern durch Transponieren des Eingangssignalblocks auf eine kleinere notwendige Anzahl von Codebüchern durchgeführt wird,
   - daß eine Huffman-Tabellenzuordnung mit Hilfe der gefundenen Klasse durchgeführt wird,
   - daß eine skalare Quantisierung sowohl des Repräsentativblocks als auch des Prädiktionsfehlersignals durchgeführt und durch den Vektorquantisierer-Index (CVQ), durch die Klasse (KVQ) und durch ein Pufferspeicher-Regelsignal (QBC) gesteuert wird,
   - daß der ausgewählte Repräsentativblock dazu verwendet wird, einen Bereich $A_V$ festzulegen (FIG 8), der dazu verwendet wird, in einer Kombination mit einem durch die Zahl $N_D$ festgelegten Bereich $A_N$ eine effektive Beschreibung eines Bereichs $A_{TC}$, eines Bereichs $A_{TV}$, in dem Vorzeichen übertragen werden und in dem signifikante Koeffizienten enthalten sind, zu erzielen,
   - daß dieser Bereich $A_V$ dadurch gegeben ist, daß die Koeffizienten des Repräsentativblocks, der aus dem Codebuch ausgewählt wurde, einen Wert ungleich Null haben und
   - daß ein Bereichsselektor (FIG 9), der einen Wert zwischen $\emptyset$ und 3 (FIG 9) haben kann, übertragen wird, der festlegt, wie aus den Bereichen $A_N$ und $A_V$ die Bereiche $A_{TC}$ und $A_{TV}$ gebildet werden.

2. Verfahren nach Anspruch 1, dadurch **gekennzeichnet,** daß zur Bestimmung der Art und Weise einer Kombination von Bereichen drei Energiemaße berechnet werden, nämlich das Energiemaß des quantisierten Eingangssignals ($E_{YI}$), das Energiemaß eines durch die Subtraktion sich ergebenden Residuums ($E_{RI}$) der Koeffizienten in dem Bereich $A_V \cap \overline{A_N}$ und das Energiemaß ($E_{OUT}$) des quantisierten Eingangssignals in dem Bereich $\overline{A_V} \cap A_N$, und daß aufgrund dieser Energiemaße ($E_{YI}$, $E_{RI}$, $E_{OUT}$) eine Auswertelogik (AWL) Signale zur Bestimmung der Art und Weise der Kombination erzeugt.

3. Verfahren nach Anspruch 1 oder 2, dadurch **gekennzeichnet,** daß ein Energiemaß ($E_{Rt}$) eines sich durch die Subtraktion ergebenden Residuums in dem Bereich $A_N$ berechnet wird, mittels welchen Energiemaßes ($E_{Rt}$) eine Auswertelogik (AWL) durch Vergleich mit einer Schwelle $S_{OK}$ eine Entscheidung trifft, ob das Residuum zu übertragen ist oder nicht, wozu ein 1-bit-Signal erzeugt wird, welches in einer Kopfinformation OVERHEAD enthalten ist, und daß für den Fall, daß das Residuum nicht zu übertragen ist, die Darstellung des Eingangssignals allein aufgrund des gewählten Repräsentativblocks ($\underline{Y}_R$), welcher mittelbar durch seinen Index übertragen wird, und der Vorzeichen des Originalsignals in dem Bereich $A_V$, welcher aus dem skalar quantisierten Repräsentativblock abgeleitet wurde, erfolgt.

4. Verfahren nach Anspruch 1, dadurch **gekennzeichnet,** daß die skalare Quantisierung mittels Tabellen, vorzugsweise in Form von ROM's, durchgeführt wird und daß die Auswahl einer aus mehreren Quantisierungs-Tabellen durch das Pufferspeicher-Regelsignal (QBC), den Vektorquantisierer-Index (CVQ) und die Klasse (KVQ) vorgenommen wird.

5. Verfahren nach Anspruch 1, dadurch **gekennzeichnet,** daß die Transformation (DCT) in der DPCM-Schleife durchgeführt wird.

6. Schaltungsanordnung zur Durchführung des Verfahrens nach einem der Ansprüche 1 bis 3, mit einem Hybrid-DCT-DPCM-Codierer, dadurch **gekennzeichnet,** daß eine Einheit (DS) zur Bestimmung einer Diagonalen, bis zu der Koeffizienten übertragen werden, enthält, der ein transformiertes und skalar quantisiertes Eingangssignal zugeführt wird, das außerdem einer ersten und einer zweiten Einheit (EC) für eine bedingte Energieberechnung übergeben wird, daß das Ausgangssignal der Einheit (DS) einer ersten Logikeinheit (u + v $N_D$) und ein skalar quantisierter Ersatzvektor aus einem Codebuch einer zweiten Logikeinheit ($\neq$ 0) zugeführt werden, daß ein Residuum-Signal (Eingangssignal minus Ersatzvektor) einer dritten und einer vierten Einheit (EC) für eine bedingte Energieberechnung übergeben wird, daß die Ausgangsignale der beiden Logikeinheiten (u + v $N_D$, $\neq$ 0) einer Verknüpfungsschaltungsanordnung zugeführt werden, die zwei Ausgangssignale für verknüpfte Bereichssignale ($A_V \overline{A_N}$, $\overline{A_V} A_N$) erzeugt, welche jeweils einem zweiten Eingang der ersten und vierten bzw. der zweiten Einheit (EC) für die bedingte Energieberechnung zugeführt werden, wobei das Ausgangsignal der ersten Logikeinheit (u + v $N_D$) unmittelbar auch einem zweiten Eingang der dritten Einheit (EC) für die bedingte Energieberechnung übergeben wird, daß die Ausgangssignale der Einheiten (EC) für die bedingte Energieberechnung ($E_{YI}$, $E_{OUT}$, $E_{Rt}$, $E_{RI}$) einer Auswertelogik (AWL) zugeführt werden, die Ausgangssignale ($L_{OK}$, SA) ausgibt, und daß das Ausgangssignal der Einheit (DS) zur Bestimmung einer Diagonalen als weiteres Ausgangssignal der Schaltungsanordnung unmittelbar ausgegeben wird.

7. Schaltungsanordnung nach Anspruch 6, dadurch **gekennzeichnet,** daß die Auswertelogik (AWL) eine logische Schaltkreisanordnung enthält, die die folgenden Funktionen ausführt:

```
if      (E_Rt < S_OK)  then
        LOK = 1..
        keine Übertragung des Residuums
        Übertrage Vorzeichen des Originalsignals Y im Bereich
        A_TV = A_V .

else    L_OK = 0
        if (E_OUT ≤ S_OUT ∧ E_RI > E_YI) then
            S_A = 0

            Übertrage Koeffizienten und Vorzeichen innerhalb des
            Bereichs
                    A_TC = A_TV = A_V

        else if (E_OUT ≤ S_OUT ∧ E_RI > E_YI) then
            S_A = 1
```

9

```
        Übertrage Koeffizienten und Vorzeichen innerhalb
        des Bereichs
```

$$A_{TC} = A_{TV} = A_N \wedge A_V$$

```
   else if (E_OUT ≤ S_OUT ∧ E_RI > E_YI) then
        S_A = 2
        Übertrage Koeffizienten innerhalb des
        Bereichs A_TC = A_N
        und Vorzeichen innerhalb des
        Bereichs A_TV = A_N ∨ A_V


   else if (E_OUT > S_OUT ∧ E_RI < E_YI) then
        S_A = 3
        Übertrage Koeffizienten und Vorzeichen innerhalb
        des Bereichs A_TC = A_TV = A_N


        endif
   endif
```

**8.** Schaltungsanordnung nach Anspruch 6 oder 7, dadurch **gekennzeichnet,** daß sämtliche Funktionen durch eine einzige integrierte Schaltungsanordnung (Ein-Chip-Schaltung) durchgeführt werden.


**Claims**

**1.** Method for reducing the image data of digital television signals, including preprocessing of the signals by means of a block-by-block transformation process, in which, in the preprocessing, both a transformation and the formation of a difference between a signal which was generated at a time t-1 and stored in a frame buffer, and a signal which is produced at a time t, are carried out so that the preprocessing forms a transformed frame-to-frame prediction error signal, the prediction error signal formed in this manner being subjected to a scalar quantization, in which a number $N_D$ is determined from the quantized prediction error signal, which number corresponds to the secondary diagonal parallel in a coefficients matrix, up to which, starting from a DC component, significant coefficients are contained, and which number is used for reducing the number of the coefficients to be transmitted, which number $N_D$ is also transmitted, characterized

- in that the prediction error signal is also subjected to a vector quantization in a manner known per se and the representative block selected as a result is transmitted indirectly by its index which represents its address in a code book, and the representative block is subtracted from the quantized prediction error signal in order to achieve by this means a reduction in the energy of the signal to be transmitted,
- in that an absolute amount of the transformed input signal is formed by eliminating the sign in order to be able to carry out a more efficient vector quantization,
- in that the signs for coefficients having a value not equal to zero are transmitted separately from the amounts of the coefficients,
- in that a classification of the block of transformation coefficients is carried out for the purpose of selecting one of a multiplicity of code books in association with a reduction in the number of code books by transposing the input signal block to a smaller necessary number of code books,
- in that a Huffman table correlation is carried out with the aid of the class found,

- in that a scalar quantization is carried out both of the representative block and of the prediction error signal and is controlled by the vector quantizer index (CVQ), by the class (KVQ) and by a buffer memory control signal (QBC),
- in that the selected representative block is used for defining (Figure 8) an area $A_V$ which is used for achieving, in a combination with an area $A_N$ defined by the number $N_D$, an effective description of an area $A_{TC}$, of an area $A_{TV}$, in which signs are transmitted and in which significant coefficients are contained,
- in that this area $A_V$ is given by the fact that the coefficients of the representative block which was selected from the code book have a value not equal to zero, and
- in that an area selector (Figure 9), which can have a value between 0 and 3 (Figure 9), is transmitted which defines how the areas $A_{TC}$ and $A_{TV}$ are formed from the areas $A_N$ and $A_V$.

2. Method according to Claim 1, characterized in that three energy measures are calculated for determining the manner of a combination of areas, namely the energy measure of the quantized input signal ($E_{YI}$), the energy measure of a remainder ($E_{RI}$), produced by the subtraction, of the coefficients in the area $A_V \cap A_N$ and the energy measure ($E_{OUT}$) of the quantized input signal in the area $A_V \cap A_N$, and in that on the basis of these energy measures ($E_{YI}$, $E_{RI}$, $E_{OUT}$), an evaluating logic (AWL) generates signals for determining the manner of the combination.

3. Method according to Claim 1 or 2, characterized in that an energy measure ($E_{Rt}$) of a remainder produced by the subtraction is calculated in the area $A_N$, by means of which energy measure ($E_{Rt}$) an evaluating logic (AWL), by comparison with a threshold $S_{OK}$, makes a decision whether the remainder is to be transmitted or not, for which purpose a 1-bit signal is generated which is contained in a header information OVERHEAD, and in that for the case where the remainder is not to be transmitted, the input signal is only represented on the basis of the selected representative block ($\underline{Y}_R$) which is transmitted indirectly by its index, and of the signs of the original signal in the area $A_V$ which was derived from the scalarly quantized representative block.

4. Method according to Claim 1, characterized in that the scalar quantization is carried out by means of tables, preferably in the form of ROMs, and in that the selection of one of a number of quantization tables is carried out by the buffer memory control signal (QBC), the vector quantizer index (CVQ) and the class (KVQ).

5. Method according to Claim 1, characterized in that the transformation (DCT) is carried out in the DPCM loop.

6. Circuit arrangement for carrying out the method according to one of Claims 1 to 3, comprising a hybrid DCT-DPCM coder, characterized in that it contains a unit (DS) for determining a diagonal up to which coefficients are transmitted, to which a transformed and scalarly quantized input signal is supplied which is also transferred to a first and to a second unit (EC) for a conditional energy calculation, in that the output signal of the unit (DS) is supplied to a first logic unit ($u + vN_D$) and a scalarly quantized substitute vector from a code book is supplied to a second logic unit ($\neq 0$) in that a remainder signal (input signal minus substitute vector) is transferred to a third and to a fourth unit (EC) for a conditional energy calculation, in that the output signals of the two logic units ($u + vN_D$, $\neq 0$) are supplied to a logic circuit arrangement which generates two output signals for logically combined area signals ($A_V A_N$, $A_V A_N$) which are in each case supplied to a second input of the first and fourth and, respectively, of the second unit (EC) for the conditional energy calculation, the output signal of the first logic unit ($u + vN_D$) also being directly transferred to a second input of the third unit (EC) for the conditional energy calculation, in that the output signals of the units (EC) for the conditional energy calculation ($E_{YI}$, $E_{OUT}$, $E_{Rt}$, $E_{RI}$) are supplied to an evaluating logic (AWL) which outputs output signals ($L_{OK}$, SA), and in that the output signal of the unit (DS) is output directly as further output signal of the circuit arrangement for determining a diagonal.

7. Circuit arrangement according to Claim 6, characterized in that the evaluating logic (AWL) contains a logic circuit arrangement which carries out the following functions:

```
if     (E_Rt < S_OK) then
           LOK = 1..
           no transfer of remainder
           transfer signs of the original signal Y in the area
           A_TV = A_V


       else L_OK = 0
           if (E_OUT ≤ S_OUT ∧ E_RI > E_YI) then
           S_A = 0
           transfer coefficients and signs within the area
           A_TC = A_TV = A_V


           else if (E_OUT ≤ S_OUT ∧ E_RI > E_YI) then
           S_A = 1


               transfer coefficients and signs within the area
               A_TC = A_TV = A_N ∩ A_V


               else if (E_OUT ≤ S_OUT ∧ E_RI > E_YI) then
               S_A = 2
               transfer coefficients within the area A_TC = A_N
               and signs within the area A_TV = A_N ∪ A_V


               else if (E_OUT > S_OUT ∧ E_RI < E_YI) then
               S_A = 3
               transfer coefficients and signs within the area
               A_TC = A_TV = A_N


               endif
       endif
```

8. Circuit arrangement according to Claim 6 or 7, characterized in that all functions are carried out by a single integrated circuit arrangement (one-chip circuit).

**Revendications**

1. Procédé de réduction des données d'image pour des signaux de télévision numériques, avec un prétraitement des signaux au moyen d'un procédé de transformation par blocs, et selon lequel, lors du prétraitement, aussi bien une transformation qu'une formation de différence entre un signal, qui est produit à un instant t-1 et a été mémorisé dans une mémoire d'images, et un signal, qui apparaît à un instant t, sont exécutées de sorte que, grâce au prétraitement, un signal transformé d'erreur de prédiction d'image à image est formé, et selon lequel le signal d'erreur de prédiction formé de cette sorte est soumis à une quantification scalaire, et à partir du signal d'erreur de prédiction quantifié est déterminé un nombre $N_D$, qui correspond à la parallèle à la diagonale secondaire dans une matrice de coefficients, jusqu'à laquelle des coefficients significatifs sont contenus à partir d'une composante continue, et qui est utilisée pour réduire le nombre des coefficients devant être transmis, le nombre $N_D$ étant également transmis, caractérisé par le fait

- que de façon connue en soi, le signal d'erreur de prédiction est en outre soumis à une quantification vectorielle et le bloc représentatif, sélectionné au moyen de cette quantification, est transmis indirectement par son indice, qui représente son adresse dans un livre de code, et le bloc représentatif est soustrait du signal d'erreur de prédiction quantifié, pour l'obtention d'une réduction de l'énergie du signal à transmettre,
- qu'une valeur absolue du signal d'entrée transformé est formée par élimination du signe de manière à permettre l'exécution d'une quantification vectorielle plus efficace,
- que les signes pour les coefficients possédant une valeur différente de zéro sont transmis séparément des valeurs absolues des coefficients,
- qu'une classification du bloc de coefficients de transformation est exécutée pour la sélection d'un livre de code qui fait partie d'une multiplicité de livres de codes lors d'une réduction, qui intervient de ce fait, du nombre des livres de codes, par transposition du bloc du signal d'entrée en un nombre plus petit nécessaire de livres de codes,
- qu'une association d'un tableau de Huffman est exécutée à l'aide de la classe trouvée,
- qu'une quantification scalaire aussi bien du bloc représentatif que du signal d'erreur de prédiction est exécutée, et est commandée par l'indice (CVQ) du quantificateur vectoriel, dans la classe (KVQ) et par un signal de réglage (QBC) de la mémoire tampon,
- que le bloc représentatif sélectionné est utilisé pour déterminer une zone $A_V$ (figure 8), qui est utilisée pour obtenir une combinaison avec une zone $A_N$ fixée par le nombre $N_D$, une description effective d'une zone $A_{TC}$, d'une zone $A_{TV}$, dans laquelle des signes sont transmis qui contient des coefficients significatifs,

  que cette zone $A_V$ est déterminée par le fait que les coefficients du bloc représentatif, qui a été sélectionné à partir du livre de code, possèdent une valeur différente de zéro, et

  qu'un sélecteur de zones (figure 9), qui peut posséder une valeur comprise entre $\emptyset$ et 3 (figure 9) et qui fixe la manière dont les zones $A_{TC}$ et $A_{TV}$ sont formées à partir des zones $A_N$ et $A_V$, est transmise.

2. Procédé suivant la revendication 1, caractérisé par le fait que pour la détermination du mode de combinaison de zones, trois valeurs d'énergie sont calculées, à savoir la valeur d'énergie du signal d'entrée quantifié ($E_{YI}$), la valeur d'énergie d'un résidu ($E_{RI}$), obtenu sous l'effet de la soustraction, des coefficients dans la zone $A_V \cap \overline{A_N}$ et la valeur d'énergie ($E_{OUT}$) du signal d'entrée quantifié dans la zone $\overline{A_V} \cap A_N$ et que, sur la base de ces valeurs d'énergie ($E_{YI}$, $E_{RI}$, $E_{OUT}$), une unité logique d'évaluation (AWL) produit des signaux pour déterminer le type et le mode de la combinaison.

3. Procédé suivant la revendication 1 ou 2, caractérisé par le fait qu'une valeur d'énergie ($E_{Rt}$) d'un résidu, qui résulte de la soustraction, dans la zone $A_N$ est calculée, une unité logique d'évaluation (AWL) prenant, sur la base de cette valeur d'énergie ($E_{Rt}$) et par comparaison à seuil $S_{OK}$, une décision concernant le fait que le résidu doit être transmis ou non, auquel cas un signal à 1 bit est produit, qui est contenu dans une information de tête OVERHEAD, et que dans le cas où le résidu ne doit pas être transmis, la représentation du signal d'entrée s'effectue uniquement sur la base du bloc représentatif sélectionné ($\underline{Y_R}$), qui est transmis indirectement au moyen de son indice, et sur la base du signal original dans la zone $A_V$, qui a été obtenu à partir du bloc représentatif quantifié au moyen de la quantification scalaire.

4. Procédé suivant la revendication 1, caractérisé par le fait que la quantification scalaire est exécutée au moyen de tableaux, de préférence sous la forme de mémoires ROM, et que la sélection d'un tableau faisant partie d'une pluralité de tableaux de quantification est réalisée au moyen du signal de réglage (QBC) de la mémoire tampon, de l'indice (CVQ) du quantificateur vectoriel et de la classe (KVQ).

5. Procédé suivant la revendication 1, caractérisé par le fait que la transformation (DCT) est exécutée dans la boucle DPCM.

6. Montage pour la mise en oeuvre du procédé suivant l'une des revendications 1 à 3, dans un décodeur DCT-DPCM hybride, caractérisé par le fait qu'il contient une unité (DS) servant à déterminer une diagonale, jusqu'à laquelle des coefficients sont transmis, et à laquelle est envoyé un signal d'entrée transformé et quantifié selon une quantification scalaire et qui est en outre transmis à des première et seconde unités (EC) pour un calcul conditionnel d'énergie, que le signal de sortie de l'unité (DS) est envoyé à une première unité logique $(u + v N_D)$ et qu'un vecteur de remplacement quantifié selon une quantification scalaire est envoyé à partir d'un livre de code à une seconde unité logique ($\neq$ 0), qu'un signal de résidu (signal d'entrée moins le vecteur de remplacement) est envoyé à une troisième unité et à une quatrième unité (EC) pour un calcul d'énergie conditionnel, que les signaux de sortie des deux unités logiques $(u + v N_D) \neq 0$) sont envoyés à un montage combinatoire, qui produit deux signaux de sortie pour les signaux de zone combinés ($A_V \cap \overline{A_N}$, $\overline{A_V} \cap A_N$), qui sont envoyés respectivement à une seconde entrée des première et quatrième ou de la seconde unité (EC) pour le calcul d'énergie conditionnel, le signal de sortie de la première unité logique $(u + v N_D)$ étant transmis directement également à une seconde entrée de la troisième unité (EC) pour le calcul d'énergie conditionnel, que les signaux de sortie des unités (EC) sont envoyés pour le calcul d'énergie conditionnel ($E_{YI}$,$E_{OUT}$, $E_{Rt}$, $E_{RI}$) d'une unité logique d'évaluation (AWL), qui délivre des signaux de sortie ($L_{OK}$, SA), et que le signal de sortie de l'unité (DS) est délivré directement pour la détermination d'une diagonale comme autre signal de sortie du montage.

7. Montage suivant la revendication 6, caractérisé par le fait que l'unité logique d'évaluation (AWL) contient un circuit logique, qui exécute les fonctions suivantes :

```
if        (E_RT < S_OK) then
          LOCK = 1..
          Aucune transmission du résidu
          Transfert du signe du signal original Y dans la zone
          A_TV = A_V


else      L_OK = 0
          if (E_OUT ≤ S_OUT ∧ E_RI > E_YI) then
              S_A = 0
           transfert de coefficients et de signes à l'intérieur
          de la zone
                  A_TC = A_TV = A_V
          else if (E_OUT ≤ S_OUT ∧ E_RI > E_YI) then
                  S_A = 1
                  transfert des coefficients et des signes à
                  l'intérieur de la zone
                  A_TC = A_TV = A_N ∩ A_V
          else if (E_OUT ≤ S_OUT ∧ E_YI) then
                  S_A = 2
                  transfert de coefficients à l'intérieur de la
                  zone A_TC = A_N
                  et de signes à l'intérieur de la zone A_TV = A_N
                  ∪ A_V
          else if (E_OUT > S_OUT ∧ E_RI < E_YI) then
                  S_A = 3
                  transfert de coefficients et de signes à
                  l'intérieur de la zone A_TC = A_TV = A_N
          endif
   endif.
```

8. Montage suivant la revendication 6 ou 7, caractérisé par le fait que toutes les fonctions sont exécutées par un seul montage intégré (circuit monopuce).

## FIG 1

QUELLE — CODER — KANAL — DECODER — SENKE

VIDEO-SIGNAL

VIDEO-SIGNAL

| KOPFINFORMA-TION (OVERHEAD) | CODEWORT-INDEX (CVQ) | RESIDUUM | VORZEICHEN | GLEICHANTEIL |

$S_A = 0$  $S_A = 1$  $S_A = 2$  $S_A = 3$

**FIG9A**

Koeffizienten

**FIG9B**

Vorzeichen

übertragene  Bereiche

# FIG 2

von Quelle Bildsignal

Transformation

Sender

Gegenstand der Erfindung

Kann entfallen z.B. bei Standbildübertragung

Kanal-codierung

Kanal

Kanaldeco-codierung

Rücktransformation

Rekonstruiertes Bildsignal

zur Senke

Gegenstand der Erfindung

Empfänger

Stand der Technik

EP 0 284 962 B1

FIG 3

# FIG 4

EP 0 284 962 B1

**FIG 5**

Klasseneinteilung mittels Energien $E_H$ und $E_V$
Kreissegmente deuten die Klasseneinteilung mittels
Energie $E_{AC}$ an.
I bis V: Codebuch-Auswahl, 0 bis 7: Klasse

Klasseneinteilung

**FIG 6**

Koeffizienten-Bereiche zur Berechnung der Energien
$E_H, E_V$ und $E_{AC}$.
Energieberechnung

FIG 7

Transformiertes und skalar quantisiertes Eingangssignal

Koeffizienten Bereichswahl

# FIG 8

Zu den im Beschreibungstext vorkommenden Bereichen $A_N$, $A_V$ und Kombinationen von $A_N$ und $A_V$ gehören folgende schraffierten Bereiche im obenstehenden Bild:

$A_N$: ///// und ⟨⟨⟨⟨⟨

$A_V$: \\\\\ und ⟨⟨⟨⟨⟨

$A_N \cap \overline{A}_V$: /////
$\overline{A}_N \cap A_V$: \\\\\\
$A_N \cap A_V$: ⟨⟨⟨⟨⟨⟨
$A_N \cup A_V$: ⟨⟨⟨⟨⟨ und ///// und \\\\\

Koeffizientenbereiche